# EUROPEAN PATENT SPECIFICATION

(11) **EP 3 381 641 B1**
(45) Date of publication and mention of the grant of the patent: **21.08.2019**
(21) Application number: 18163255.5
(22) Date of filing: 22.03.2018
(51) Int. Cl.: B29C 45/40, F16D 1/02, B29C 45/17

(54) **INJECTION MOLDING MACHINE**
SPRITZGIESSMASCHINE
MACHINE DE MOULAGE À INJECTION

(30) Priority: 31.03.2017 JP 2017072291
(43) Date of publication of application: 03.10.2018
(73) Proprietor: Sumitomo Heavy Industries, Ltd., Tokyo 141-6025 (JP)
(72) Inventor: MORIYA, Tomohiro, Chiba 263-0001 (JP); TAMURA, Atsuro, Chiba 263-0001 (JP); ABE, Masahiro, Chiba 263-0001 (JP); MIZUHARA, Tadashi, Chiba 263-0001 (JP); LEI, Lei, Chiba 263-0001 (JP)
(74) Representative: Louis Pöhlau Lohrentz

(56) References cited:
- EP-A1- 1 260 342
- DE-A1- 3 309 707
- GB-A- 2 237 767
- JP-A- S 625 825
- JP-A- S6 319 219
- US-A- 4 192 616
- US-A- 4 645 446
- US-A1- 2010 310 709

## Description

### BACKGROUND OF THE INVENTION

### Field of the Invention

Certain embodiments of the present invention relate to an injection molding machine.

United States Patent US 4 645 446 discloses an injection molding machine in which one end of an ejector piston rod is led via a guide bushing through a die mounting wall.

Japanese Patent Document JPS625825 discloses an injection molding machine in which an extruding rod is moved by a hydraulic plunger and passes through a hole in a die plate.

Japanese Patent Document JPS6319219 discloses an injection molding machine in which, when the movable platen is retracted, an ejector pin is held stationary after the ejector plate hits the leading end of a strike rod.

An injection molding machine disclosed in Japanese Unexamined Patent Application Publication No. 10-113957 includes an ejector pin which has a front end facing a cavity space and is disposed to be movable forward or rearward and an ejector rod which is fixed to the ejector pin via an ejector plate. A ball screw nut is screwed to a ball screw shaft and a crosshead is connected to a front end of the ball screw shaft. In addition, the ejector rod is fixed to a front end of the crosshead and the ejector plate is fixed to a front end of the ejector rod. If the ball screw nut is rotated and the ball screw shaft is moved forward or rearward, the ejector rod, the ejector plate, or the ejector pin is moved forward or rearward. It is possible to eject to a molding product from a movable mold by moving the ejector pin forward.

The ejector rod is disposed in the through-hole of the platen, to which the mold such as the movable mold is attached, so as to be movable forward or rearward.

In the related art, in order allow an attachment error, a dimensional error, or the like, an inner diameter of the through-hole of the platen is larger than an outer diameter of the ejector rod. In addition, the ejector rod is supported by the crosshead in a cantilever manner.

The ejector rod is long, and thus, the ejector rod may be deflected by the gravity or the like or may be tilted by the attachment error, the dimensional error, or the like. Accordingly, a one-side contact of a tip surface of the ejector rod with respect to the ejector plate or the like may occur.

### SUMMARY OF THE INVENTION

The present invention is made in consideration of the above-described problems, and a main object thereof is to provide an injection molding machine capable of suppressing a one-side contact of a tip surface of an ejector rod.

In order to achieve the above-described object, according to an aspect of the present invention, there is provided an injection molding machine including: a platen to which a mold is attached; an ejector rod which is disposed in a through-hole of the platen to be movable forward or rearward and ejects a molding product from the mold; and a bearing which is provided inside the through-hole of the platen, in which the bearing is in contact with the ejector rod and guides the ejector rod in an axial direction of the ejector rod.

According to the aspect of the present invention, the injection molding machine capable of suppressing a one-side contact of a tip surface of the ejector rod is provided.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a view showing a state when the ejector unit according to the embodiment is in a standby state.
Fig. 4 is a view showing a state when the ejector unit according to the embodiment performs compression-molding.
Fig. 5 is a view showing a state when the ejector unit according to the embodiment performs depressurization of a molding product.
Fig. 6 is a view showing a state when the ejector unit according to the embodiment ejects the molding product.
Fig. 7 is a view showing a structure around a crosshead and an ejector rod according to an embodiment.
Fig. 8 is the replacement work of the ejector rod shown in Fig. 7.
Fig. 9 is a view showing a structure around the crosshead and the ejector rod according to another embodiment.
Fig. 10 is a view showing a replacement work of the ejector rod shown in Fig. 9.
Fig. 11 is a view showing a structure around the crosshead and the ejector rod according to still another embodiment.
Fig. 12 is a view showing a replacement work of the ejector rod shown in Fig. 11.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

### Injection Molding Machine

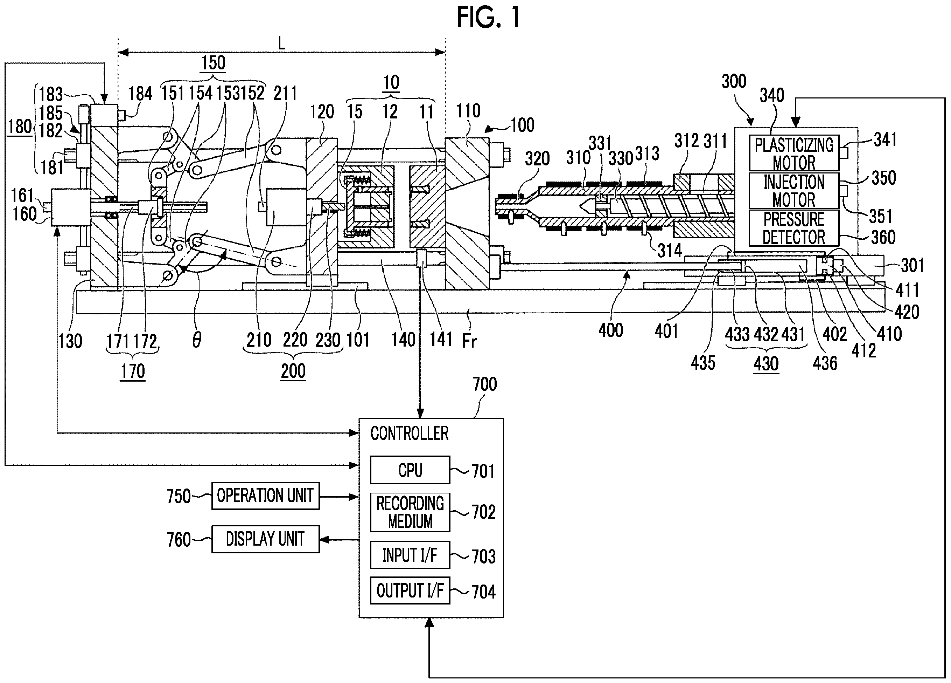

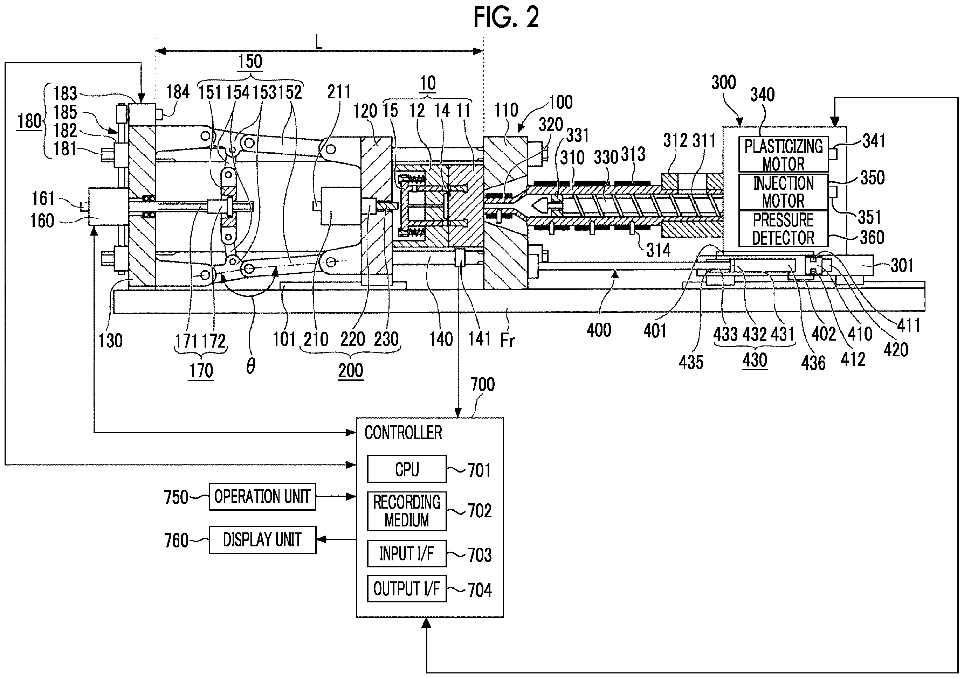

Fig. 1 is a view showing a state when a mold opening of an injection molding machine according to an embodiment is completed. Fig. 2 is a view showing a state when a mold of the injection molding machine according to the embodiment is clamped. As shown in Figs. 1 and 2, the injection molding machines include a mold clamping unit 100, an ejector unit 200, an injection unit 300, a movement unit 400, and a controller 700. Hereinafter, each component of the injection molding machine will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 is moved forward or rearward with respect to the stationary platen 110, and thus, closing, clamping, and opening of the mold are performed. The mold unit 10 is configured of the stationary mold 11 and the movable mold 12.

The toggle support 130 is connected to the stationary platen 110 with a gap therebetween, and is placed on the frame Fr to be movable in mold opening and closing directions . In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or the like and the second link 153 is attached to the toggle support 130 so as to be oscillated by pins or the like. The second link 153 is attached to the crosshead 151 via a third link 154. If the crosshead 151 is moved forward or rearward with respect to the toggle support 130, the first link 152 and the second link 153 are bent and stretched and the movable platen 120 is moved forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 is moved forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 is moved forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products maybe simultaneously obtained.

In the mold opening process, the mold clamping motor 160 is driven to move the crosshead 151 rearward to a mold opening completion position at a set speed. Accordingly, the movable platen 120 is moved rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including a speed switching position, a mold closing completion position, and a mold clamping position) of the crosshead 151 in the mold closing process and the mold clamping process are collectively set as a series of setting conditions. In addition, instead of the speed, the positions, or the like of the crosshead 151, a speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 becomes a predetermined angle at the time of a mold touch where the movable mold 12 comes into contact with the stationary mold 11.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends signals indicating the detection results to the controller 700. The detection results of the mold space adjustment motor encoder 184 are used to monitor or control the position of the toggle support 130 or the gap L.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motors 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen and is connected to the upper platen via the tie bar. The upper platen and the toggle support are connected to each other in mold opening and closing directions by the tie bar with a gap therebetween. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### Ejector Unit

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is open is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can be moved forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the controller 700.

In the ejection process, the ejector motor 210 is driven to move the ejector rod 230 forward from a standby position to an ejection position at a set speed, and thus, the movable member 15 is moved forward and the molding product is ejected. Thereafter, the ejector motor 210 is driven to move the ejector rod 230 rearward at a set speed, and thus, the movable member 15 is moved rearward to an original standby position. For example, a position or speed of the ejector rod 230 is detected using an ejector motor encoder 211. The ejector motor encoder 211 detects the rotation of the ejector motor 210 and sends signals indicating the detection results to the controller 700.

### Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 is moved rearward. Thereafter, if the screw 330 is moved forward, the liquid molding material accumulated in front of the screw 330 is injected from the nozzle 320 and the inside of the mold unit 10 is filled with the liquid molding material.

A backf low prevention ring 331 is attached to a front portion of the screw 330 to be movable forward or rearward as a backflow prevention valve which prevents a backflow of the molding material from the front side of the screw 330 toward the rear side when the screw 330 is pushed forward.

When the screw 330 is moved forward, the backflow prevention ring 331 is pushed toward the rear side by the pressure of the molding material in front of the screw 330 and is moved rearward relative to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and is moved forward relative to the screw 330 to an open position (refer to Fig. 1) at which the flow path of the molding material is open. Accordingly, the molding material is fed to the front side of the screw 330.

The backflow prevention ring 331 maybe either a co-rotation type ring which rotates together with the screw 330 or a non-co-rotation type ring which does not rotate together with the screw 330.

In addition, the injection unit 300 may include a drive source which moves the backflow prevention ring 331 forward or rearward relative to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder or the like, for example.

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may be moved forward or may be moved rearward at a very slow speed.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 is moved rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends signals indicating the detection results to the controller 700.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 is moved rearward to a plasticizing completion position and a predetermined amount of the molding materials is accumulated in front of the screw 330, the plasticizing process is completed.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 is moved forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 is moved rearward and thus, the nozzle 320 is separated from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### Controller

For example, as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is referred to as "shot" or a "molding cycle". In addition, a time required for once shot is also referred to as a "molding cycle time".

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700.

The operation screen is used for the setting of the injection molding machine or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

### Detail of Ejector Unit

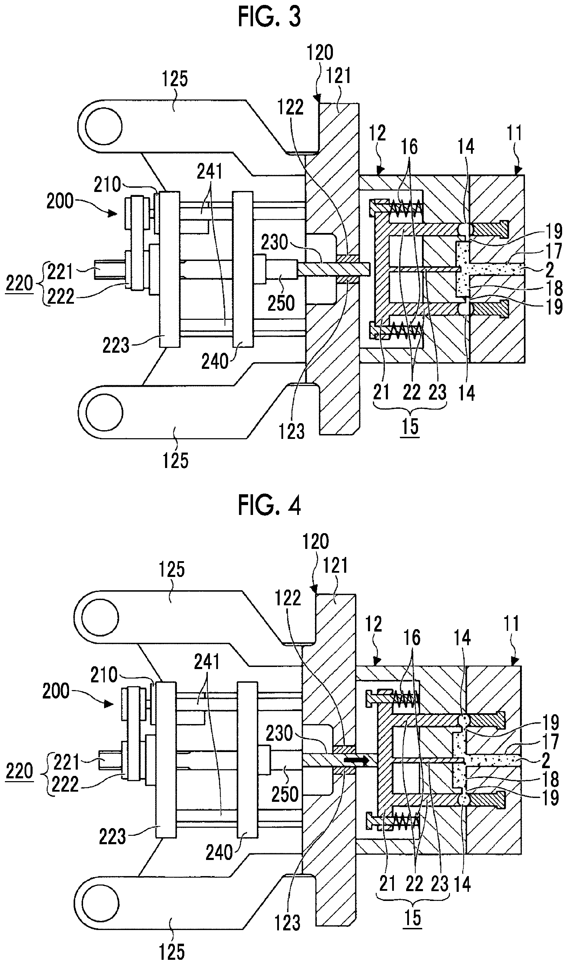

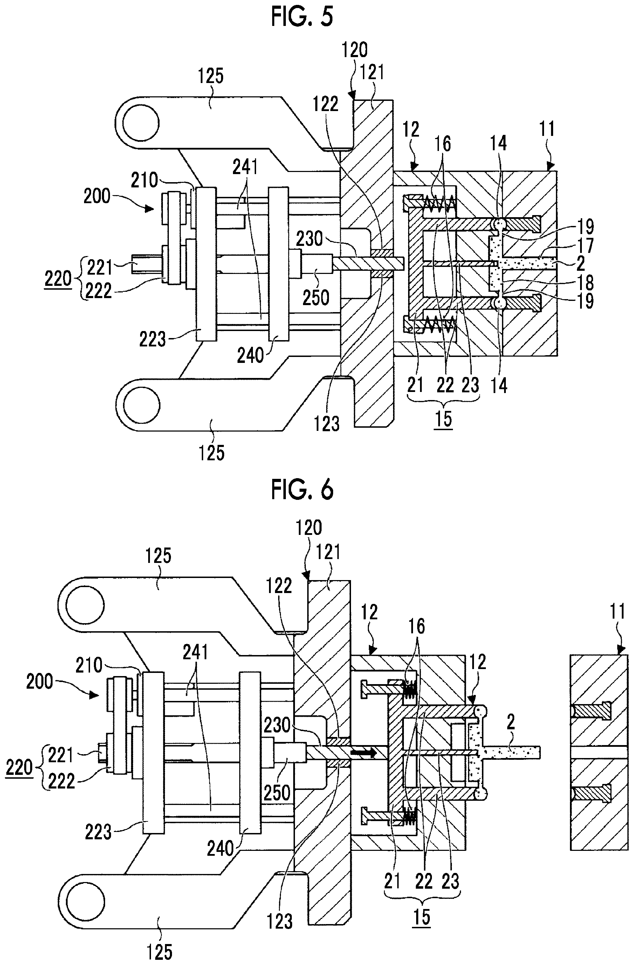

Fig. 3 is a view showing a state when the ejector unit according to the embodiment is in a standby state. Fig. 4 is a view showing a state when the ejector unit according to the embodiment performs compression-molding. Fig. 5 is a view showing a state when the ejector unit according to the embodiment performs depressurization of the molding product. Fig. 6 is a view showing a state when the ejector unit according to the embodiment ejects the molding product.

The ejector unit 200 is attached to the movable platen 120. The movable platen 120 includes a movable platen body portion 121 to which the movable mold 12 is attached and movable platen link attachment portions 125 to which oscillating shafts of the first links 152 are attached. The movable platen body portion 121 and the movable platen link attachment portions 125 may be integrally formed by casting or the like.

The movable platen body portion 121 includes a plate-shaped portion which is formed in an approximately rectangular shape when viewed in the mold opening and closing directions. Notches may be formed along the tie bars 140 at four corners of the plate-shaped portion. Instead of the notches, through-holes into which the tie bars 140 are inserted may be formed. The plate-shaped portion includes a through-hole 122, into which the ejector rod 230 is inserted, at the center portion of the plate-shaped portion.

In addition, the movable platen body portion 121 may further include a tubular portion which protrudes rearward from an outer peripheral edge portion of the plate-shaped portion, in addition to the plate-shaped portion. The tubular portion is formed into a rectangular frame shape when viewed in the mold opening and closing directions and forms a space for accommodating at least a portion of the ejector unit 200 inside the tubular portion.

For example, a pair of upper and lower movable platen link attachment portions 125 is provided on a surface (rear surface) of the movable platen body portion 121 facing the toggle support 130. A through-hole is formed on a tip portion of each movable platen link attachment portion 125, the oscillating shaft is inserted into the through-hole, and thus, the first link 152 is oscillatably attached to the movable platen link attachment portion 125 via the oscillating shaft.

As shown in Figs. 3 to 6, for example, the ejector unit 200 includes the ejector motor 210, the motion conversion mechanism 220, the ejector rod 230, the crosshead 240, a coupling 250, or the like.

The ejector motor 210 is fixed to the movable platen 120. The rotary motion of the ejector motor 210 is transmitted to the motion conversion mechanism 220 via a belt or a pulley. However, the rotary motion of the ejector motor 210 may be directly transmitted to the motion conversion mechanism 220.

The motion conversion mechanism 220 converts the rotary motion of the ejector motor 210 into the linear motion of the crosshead 240. The linear motion of the crosshead 240 is transmitted to the ejector rod 230 via the coupling 250.

The motion conversion mechanism 220 includes a screw shaft 221 and a screw nut 222 which is screwed to the screw shaft 221. A ball or a roller may be interposed between the screw shaft 221 and the screw nut 222. The screw shaft 221 penetrates an attachment plate 223 which is provided with a predetermined gap between the screw shaft 221 and the movable platen body portion 121 behind the movable platen body portion 121 and a front end portion of the screw shaft 221 is fixed to the crosshead 240. Meanwhile, the screw nut 222 is held to be rotatable and unmovable forward or rearward to the attachment plate 223.

If the ejector motor 210 is driven to rotate the screw nut 222, the screw shaft 221 or the crosshead 240 is moved forward or rearward. In addition, a position of the screw shaft 221 or the screw nut 222 is not particularly limited. For example, the screw shaft 221 may be held to be rotatable and unmovable forward or rearward by the attachment plate 223 and the screw nut 222 may be fixed to the crosshead 240. In this case, if the ejector motor 210 is driven to rotate the screw shaft 221, the screw nut 222 or the crosshead 240 is moved forward or rearward.

The crosshead 240 is movable forward or rearward along guide rods 241 which is bridged between the attachment plate 223 and the movable platen body portion 121. In order to prevent a rotation of the crosshead 240, a plurality of guide rods 241 may be provided. In addition, the guide rods 241 may be supported by any one of the attachment plate 223 and the movable platen body portion 121 in a cantilever manner.

The ejector rod 230 is movable forward or rearward through the through-hole 122 penetrating the movable platen 120 (more specifically, the movable platen body portion 121) in a front-rear direction, and the ejector rod 230 is moved forward or rearward according to a forward or rearward movement of the crosshead 240. In Figs. 3 to 6, one ejector rod 230 is provided. However, a plurality of ejector rods 230 may be provided.

A front end portion of the ejector rod 230 comes into contact with the movable member 15 which is disposed to be movable forward or rearward inside the movable mold 12. The front end portion of the ejector rod 230 is not connected to the movable member 15. However, the front end portion of the ejector rod 230 may be connected to the movable member 15. Moreover, in a case where the front end portion of the ejector rod 230 is connected to the movable member 15, springs 16 may be omitted.

If the ejector motor 210 is driven to move the ejector rod 230, the movable member 15 is moved forward, and thus, compression of the molding material 2 is performed. Thereafter, if the ejector rod 230 is driven and the ejector rod 230 is moved rearward, the movable member 15 is moved rearward while being pressed to the ejector rod 230 by elastic restoring forces of the springs 16, and thus, the depressurization of the molding product is performed. The depressurized molding product is ejected from the movable mold 12 by the forward movement of the ejector rod 230.

The mold unit 10 includes the stationary mold 11 which is attached to the stationary platen 110 and the movable mold 12 which is attached to the movable platen 120. As shown in Fig. 3, when the mold is clamped, the cavity spaces 14 are formed between the stationary mold 11 and the movable mold 12. The molding material 2 reaches the cavity spaces 14 via a sprue 17 which is formed in the stationary mold 11, runners 18 which branches from a terminal portion of the sprue 17, and gates 19 which are provided at terminal portions of the runners 18.

The mold unit 10 includes the movable member 15 which is disposed to be movable forward or rearward inside the movable mold 12. As shown in Figs. 3 to 6, the movable member 15 includes a plate-shaped ejector plate 21 which is perpendicular to the front-rear direction, rod-shaped compression core pins 22 which extend forward from the ejector plate 21, and a rod-shaped ejector pin 23 which extends forward from the ejector plate 21.

The ejector plate 21 is pushed forward by the ejector rod 230 which is disposed behind the ejector plate 21. In addition, the ejector plate 21 is pushed forward by the springs 16 which are disposed in front of the ejector plate 21.

The compression core pins 22 extend forward from the ejector plate 21 and penetrate the movable mold 12. A front end surface of each of the compression core pins 22 becomes a portion of a wall surface of the cavity space 14. The compression core pins 22 are moved rearward along with the ejector plate 21 and perform compression of the molding material 2, depressurization of the compression-molded molding product, and ejection of the depressurized molding product.

The ejector pin 23 extends forward from the ejector plate 21 and penetrates the movable mold 12. As shown in Fig. 3, the molding material 2 flowing through the runner 18 is attached to the front end portion of the ejector pin 23 and is solidified. The ejector pin 23 is used to eject the molding material 2 solidified by the runner 18.

The ejector unit 200 is used for the compression of the molding material with which the cavity spaces 14 of the mold unit 10 are filled and the ejection of the molding product (hereinafter, referred to as a "compression-molded molding product") molded by the compression from the mold unit 10. The compression of the molding material is performed before the molding material is completely solidified. Hereinafter, an operation of the ejector unit 200 will be described.

The controller 700 moves the ejector rod 230 forward from a compression standby position shown in Fig. 3 to a compression-molding position shown in Fig. 4 from start of the filling process to completion of the holding pressure process. Accordingly, the movable member 15 is moved forward, and thus, the molding material 2 with which the cavity spaces 14 are filled is compressed.

In addition, when the ejector rod 230 is positioned at the compression standby position, in Fig. 3, the ejector rod 230 does not come into contact with the movable member 15. However, the ejector rod 230 may come into contact with the movable member 15. In the latter case, the ejector rod 230 may be connected to the movable member 15.

The controller 700 holds the ejector rod 230 at the compression-molding position shown in Fig. 4 for a predetermined time, and thereafter, moves the ejector rod 230 rearward to the depressurization position shown in Fig. 5 and depressurizes the compression-molded molding product. While the ejector rod 230 is held at the depressurization position shown in Fig. 5 for the predetermined time, the molding material with which the cavity spaces 14 are filled is solidified, and thus, the molding product is obtained. The depressurization position may be the same as the compression standby position or may be different from the compression standby position.

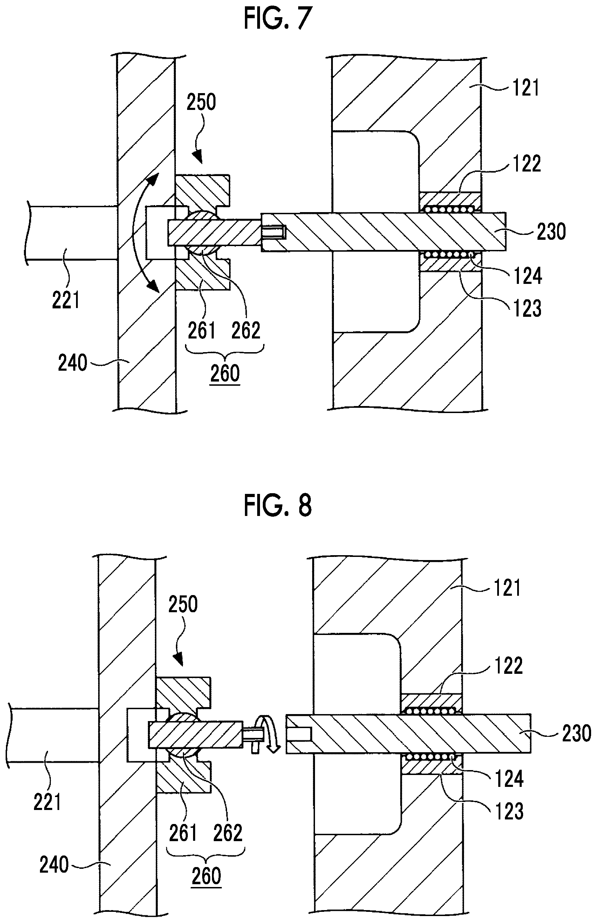

After the mold of the mold unit 10 is opened, the controller 700 moves the ejector rod 230 forward to the ejection position shown in Fig. 6. Accordingly, the movable member 15 is moved forward again, and thus, the molding product is ejected from the movable mold 12. Thereafter, the controller 700 moves the ejector rod 230 rearward to the compression standby position shown in Fig. 7.

In addition, in the present embodiment, after the ejector rod 230 is held at the compression-molding position shown in Fig. 4 for the predetermined time, the ejector rod 230 is moved rearward to the depressurization position shown in Fig. 5. However, the ejector rod 230 may not be moved rearward and the molding material with which the cavity space 14 is filled may be solidified.

Fig. 7 is a view showing a structure around the crosshead and the ejector rod according to an embodiment. The injection molding machine includes a bearing 123 which is provided inside the through-hole 122 of the movable platen 120 (more specifically, the movable platen body portion 121).

The bearing 123 is in contact with the ejector rod 230 and guides the ejector rod 230 in an axial direction of the ejector rod 230. Accordingly, it is possible to prevent the ejector rod 230 from deflecting due to the gravity or the like and to prevent the ejector rod 230 from being tilted due to an attachment error, a dimensional error, or the like, and it is possible to suppress a one-side contact of the front end surface of the ejector rod 230 with the ejector plate 21. As a result, at the time of the compression-molding shown in Fig. 4, the molding material in the plurality of cavity spaces 14 can be evenly compressed. In addition, when the molding product is ejected as shown in Fig. 6, the plurality of molding products can be evenly ejected. These effects are remarkable in a case where the front end portion of the ejector rod 230 is not connected to the ejector plate 21 and the ejector rod 230 is supported by the crosshead 240 in a cantilever manner. In this case, if the bearing 123 is not present, the front end portion of the ejector rod 230 is not restrained, and thus, the ejector rod 230 is easily hung due to the gravity or the like or is easily tilted due to the attachment error, the dimensional error, or the like.

The bearing 123 slide-guides the ejector rod 230. However, the bearing 123 may roll-guide the ejector rod 230. The bearing 123 may include a rolling body 124 which is in contact with the ejectorrod230. Astherollingbody124, a ball is used. However, a roller may be used as the rolling body 124. The bearing 123 may include a circulation path through which a plurality of rolling bodies 124 circulate.

In a case where the bearing 123 includes the rolling body 124, it is possible to decrease a clearance between the bearing 123 and the ejector rod 230. The rolling body 124 is rolled, and thus, the ejector rod 230 can be inserted into the bearing 123.

The clearance between the bearing 123 and the ejector rod 230 can decrease, and thus, the deflection or the tilting of the ejector rod 230 can be further suppressed, and thus, it is possible to further suppress the one-side contact of the front end surface of the ejector rod 230. Accordingly, at the time of the compression-molding shown in Fig. 4, the molding material in the plurality of cavity spaces 14 can be more evenly compressed. In addition, when the molding product is ejected as shown in Fig. 6, the plurality of molding products can be more evenly ejected.

An outer peripheral surface of the ejector rod 230 includes a columnar surface. The rolling body 124 of the bearing 123 may be in contact with the columnar surface of the ejector rod 230. Unlike a case where a groove extending in the front-rear direction is formed on the outer peripheral surface of the ejector rod 230 and the rolling body 124 rolls inside the groove, the ejector rod 230 can be rotated with respect to the bearing 123. Accordingly, as described above, a replacement work of the ejector rod 230 is easily performed.

Fig. 8 is the replacement work of the ejector rod shown in Fig. 7. A screw hole is formed in any one (for example, the ejector rod 230) of the ejector rod 230 and the coupling 250, a screw shaft is formed in the other (for example, the coupling 250), and thus, the screw shaft is screwed to the screw hole. By rotating the ejector rod 230, the ejector rod 230 can be attached to the coupling 250 or the ejector rod 230 can be removed from the coupling 250.

The outer peripheral surface of the ejector rod 230 includes the columnar surface such that the ejector rod 230 can be rotated with respect to the bearing 123. The rolling body 124 of the bearing 123 may be in contact with the columnar surface of the ejector rod 230. Unlike the case where the groove extending in the front-rear direction is formed on the outer peripheral surface of the ejector rod 230 and the rolling body 124 rolls inside the groove, the ejector rod 230 can be rotated with respect to the bearing 123.

The ejector rod 230 can be rotated with respect to the bearing 123, and thus, the ejector rod 230 can be replaced in a state where the crosshead 240 is prevented from being rotated by the guide rods 241. Removal or the like of the crosshead 240 is not required, and thus, the replacement work of the ejector rod 230 is easily performed.

Meanwhile, the ejector rod 230 is guided by the bearing 123, and thus, the ejector rod 230 is centered by the bearing 123. The crosshead 240 is movable forward or rearward along the guide rods 241 shown in Figs. 3 to 6.

Accordingly, misalignment may occur in a state where the connection between the ejector rod 230 and the crosshead 240 by the coupling 250 is released. The misalignment is a positional deviation in a direction orthogonal to an axis of the ejector rod 230. Accordingly, the coupling 250 connects the ejector rod 230 and the crosshead 240 to each other such that the misalignment of the ejector rod 230 and the crosshead 240 is absorbed. Accordingly, the misalignment can be allowed, stress generated by the misalignment can decrease, and damages or the like of a part of the ejector unit 200 can be suppressed.

For example, the coupling 250 connects the crosshead 240 to the ejector rod 230 such that the crosshead 240 is tiltable to the ejector rod 230, and thus, the coupling 250 absorbs the misalignment between the ejector rod 230 and the crosshead 240. The crosshead 240 is tilted according to the clearance between the crosshead 240 and the guide rods 241.

For example, the coupling 250 is a spherical bearing 260. The spherical bearing 260 includes an outer ring 261 which has a spherical surface portion on an inner surface thereof and an inner ring 262 which has a spherical surface portion on an outer surface thereof. The spherical surface portion of the outer ring 261 and the spherical surface portion of the inner ring 262 may be in contact with each other as shown in Fig. 8. In addition, a rolling body such as a ball or a roller may be interposed between the spherical surface portion of the outer ring 261 and the spherical surface portion of the inner ring 262.

One of the outer ring 261 and the inner ring 262 is fixed to the crosshead 240 (for example, the outer ring 261), and the other (for example, the inner ring 262) thereof is fixed to a rear end portion of the ejector rod 230. Accordingly, the crosshead 240 can be tiltably connected to the ejector rod 230, and thus, the misalignment between the ejector rod 230 and the crosshead 240 can be absorbed. Therefore, the stress generated by the misalignment can decrease, and the damages of a part of the ejector unit 200 can be suppressed.

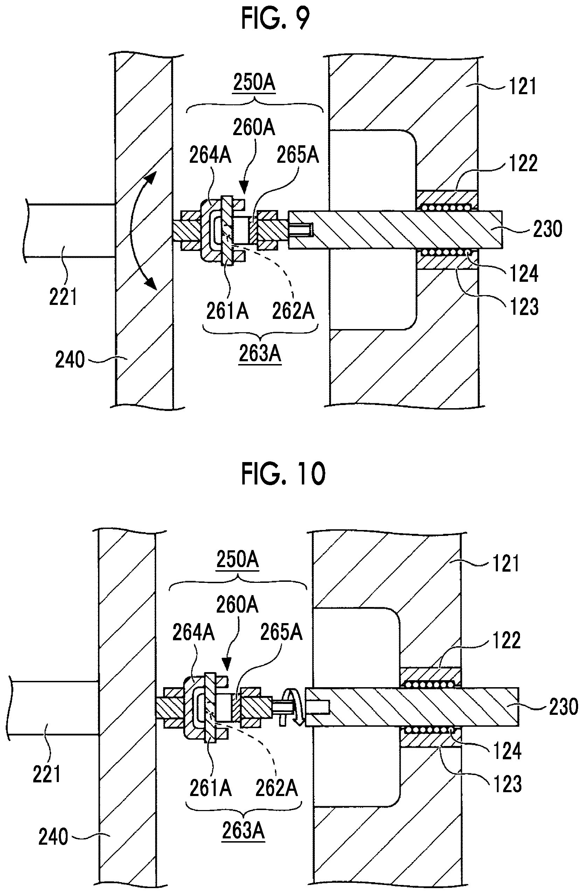

Fig. 9 is a view showing a structure around the crosshead and the ejector rod according to another embodiment. A coupling 250A shown in Fig. 9 is different from the coupling 250 shown in Fig. 7 in that the coupling 250A includes a universal joint 260A. Hereinafter, differences therebetween will be mainly described.

The universal joint 260A includes a spider 263A including a first shaft 261A and a second shaft 262A which intersect each other in a cross, a first yoke 264 A which is oscillatable about the first shaft 261A, and a second yoke 265A which is oscillatable about the second shaft 262A. The first yoke 264A branches in two branches and rotatably supports both axial end portions of the first shaft 261A. The second yoke 265A branches in two branches and rotatably supports both axial end portions of the second shaft 262A.

One (for example, the first yoke 264A) of the first yoke 264A and the second yoke 265A is fixed to the crosshead 240, and the other (for example, the second yoke 265A) thereof is fixed to the rear end portion of the ejector rod 230. Accordingly, the crosshead 240 can be tiltably connected to the ejector rod 230, and thus, the misalignment between the ejector rod 230 and the crosshead 240 can be absorbed. Therefore, the stress generated by the misalignment can decrease, and the damages of a part of the ejector unit 200 can be suppressed.

Fig. 10 is a view showing a replacement work of the ejector rod shown in Fig. 9. A screw hole is formed in any one (for example, the ejector rod 230) of the ejector rod 230 and the coupling 250A, a screw shaft is formed in the other (for example, the coupling 250A), and thus, the screw shaft is screwed to the screw hole. By rotating the ejector rod 230, the ejector rod 230 can be attached to the coupling 250A or the ejector rod 230 can be removed from the coupling 250A.

The outer peripheral surface of the ejector rod 230 includes the columnar surface such that the ejector rod 230 can be rotated with respect to the bearing 123. The rolling body 124 of the bearing 123 may be in contact with the columnar surface of the ejector rod 230. Unlike the case where the groove extending in the front-rear direction is formed on the outer peripheral surface of the ejector rod 230 and the rolling body 124 rolls inside the groove, the ejector rod 230 can be rotated with respect to the bearing 123.

The ejector rod 230 can be rotated with respect to the bearing 123, and thus, the ejector rod 230 can be replaced in a state where the crosshead 240 is prevented from being rotated by the guide rods 241. Removal or the like of the crosshead 240 is not required, and thus, the replacement work of the ejector rod 230 is easily performed.

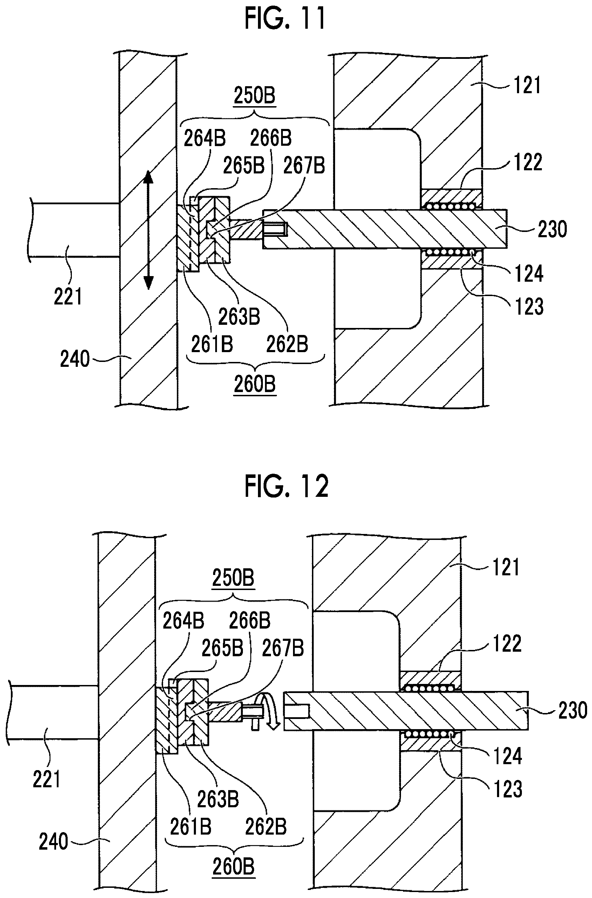

Fig. 11 is a view showing a structure around the crosshead and the ejector rod according to still another embodiment. A coupling 250B shown in Fig. 11 is different from the coupling 250 shown in Fig. 7 or the coupling 250A shown in Fig. 9 in that the crosshead 240 is connected to the ejector rod 230 to be movable in the direction orthogonal to the axis of the ejector rod 230. Hereinafter, differences therebetween will be mainly described.

For example, the coupling 250B includes an Oldham coupling 260B. The Oldham coupling 260B includes a first hub 261B, a second hub 262B, and a spacer 263B which is provided between the first hub 261B and the second hub 262B. The spacer 263B includes a key groove 265B to which a key 264B of the first hub 261B is fitted, and a key groove 267B to which a key 266B of the second hub 262B is fitted. The two key grooves 265B and 267B are perpendicular to each other. The key 264B and the key groove 265B slide to each other, and the key 266B and the key groove 267B slide to each other.

One (for example, the first hub 261B) of the first hub 261B and the second hub 262B is fixed to the crosshead 240, and the other (for example, the second hub 262B) thereof is fixed to the rear end portion of the ejector rod 230. Accordingly, the crosshead 240 can be connected to the ejector rod 230 to be movable in the direction orthogonal to the axis of the ejector rod 230, and thus, the misalignment between the ejector rod 230 and the crosshead 240 can be absorbed. Therefore, the stress generated by the misalignment can decrease, and the damages of a part of the ejector unit 200 can be suppressed.

Fig. 12 is a view showing a replacement work of the ejector rod shown in Fig. 11. A screw hole is formed in any one (for example, the ejector rod 230) of the ejector rod 230 and the coupling 250B, a screw shaft is formed in the other (for example, the coupling 250B), and thus, the screw shaft is screwed to the screw hole. By rotating the ejector rod 230, the ejector rod 230 can be attached to the coupling 250B or the ejector rod 230 can be removed from the coupling 250B.

The outer peripheral surface of the ejector rod 230 includes the columnar surface such that the ejector rod 230 can be rotated with respect to the bearing 123. The rolling body 124 of the bearing 123 may be in contact with the columnar surface of the ejector rod 230. Unlike the case where the groove extending in the front-rear direction is formed on the outer peripheral surface of the ejector rod 230 and the rolling body 124 rolls inside the groove, the ejector rod 230 can be rotated with respect to the bearing 123.

The ejector rod 230 can be rotated with respect to the bearing 123, and thus, the ejector rod 230 can be replaced in a state where the crosshead 240 is prevented from being rotated by the guide rods 241. Removal or the like of the crosshead 240 is not required, and thus, the replacement work of the ejector rod 230 is easily performed.

### Modification and Improvement

Hereinbefore, the embodiments or the like of the injection molding machine are described. However, the present invention is not limited to the above-described embodiments or the like, and various modifications and improvements can be applied to the present invention within the scope of the invention defined in the appended claims.

The ejector unit 200 of the above-described embodiments is used for the compression of the molding material with which the cavity space 14 of the mold unit 10 is filled and the ejection of the molding product molded by the compression from the mold unit 10. However, the ejector unit 200 may be used for only the ejection of the molding product from the mold unit 10.

The ejector unit 200 of the above-described embodiments is attached to the movable platen 120. However, the ejector unit 200 may be attached to the stationary platen 110. Moreover, in a case where the mold clamping unit 100 is the vertical type mold clamping unit, the ejector unit 200 may be attached to the lower platen. As described above, the lower platen may be the movable platen or the stationary platen.

In the above-described embodiments, as the coupling which connects the ejector rod 230 and the crosshead 240 to each other, the spherical bearing 260, the universal joint 260A, and the Oldham coupling 260B are used alone. However, a plurality of combinations thereof may be used. The number of the couplings is not particularly limited. In addition, the type of the coupling is not particularly limited. For example, a spring-attached flange may be used as the coupling. The spring absorbs the misalignment between the ejector rod 230 and the crosshead 240.

### Brief Description of the Reference Symbols

- 10:: mold unit
- 12:: movable mold
- 100:: mold clamping unit
- 120:: movable platen
- 121:: movable platen body portion
- 122:: through-hole
- 123:: bearing
- 124:: rolling body
- 125:: movable platen link attachment portion
- 200:: ejector unit
- 210:: ejector motor
- 220:: motion conversion mechanism
- 230:: ejector rod
- 240:: crosshead
- 250:: coupling
- 260:: spherical bearing
- 260A:: universal joint
- 260B:: Oldham coupling

## Claims

1. An injection molding machine comprising:
a platen (120) to which a mold is attached;
an ejector rod (230) which is disposed in a through-hole (122) of the platen (120) to be movable forward or rearward and ejects a molding product from the mold;
a bearing (123) which is provided inside the through-hole (122) of the platen (120),
a crosshead (240) which moves the ejector rod (230) forward or rearward; and
a coupling (250) which connects the ejector rod (230) and the crosshead (240) to each other to absorb misalignment between the ejector rod (230) and the crosshead (240),
wherein the bearing (123) is in contact with the ejector rod (230) and guides the ejector rod (230) in an axial direction of the ejector rod (230).

2. The injection molding machine according to claim 1,
wherein the coupling (250) connects the crosshead (240) to the ejector rod (230) to be tiltable with respect to the ejector rod (230) .

3. The injection molding machine according to claim 1 or 2,
wherein the coupling (250) connects the crosshead (240) to the ejector rod (230) to be movable in a direction orthogonal to an axis of the ejector rod (230).

4. The injection molding machine according to any one of claims 1 to 3,
wherein the bearing (123) includes a rolling body (124) which is in contact with the ejector rod (230).

5. The injection molding machine according to claim 4,
wherein an outer peripheral surface of the ejector rod (230) includes a columnar surface, and
wherein the rolling body (124) is in contact with the columnar surface.

## Patentansprüche

1. Spritzgießmaschine, umfassend:
eine Formträgerplatte (120), an welcher eine Form befestigt ist;
eine Auswurfstange (230), welche in einem Durchgangsloch (122) der Formträgerplatte (120) angeordnet ist, um vorwärts oder rückwärts beweglich zu sein, und ein Spritzgießerzeugnis aus der Form ausstößt;
ein Lager (123), welches im Inneren des Durchgangslochs (122) der Formträgerplatte (120) bereitgestellt ist;
ein Querhaupt (240), welches die Auswurfstange (230) vorwärts oder rückwärts bewegt; und
eine Kopplung (250), welche die Auswurfstange (230) und das Querhaupt (240) miteinander verbindet, um eine Fehlausrichtung zwischen der Auswurfstange (230) und dem Querhaupt (240) zu absorbieren,
wobei das Lager (123) sich mit der Auswurfstange (230) in Kontakt befindet und die Auswurfstange (230) in einer axialen Richtung der Auswurfstange (230) führt.

2. Spritzgießmaschine nach Anspruch 1,
wobei die Kopplung (250) das Querhaupt (240) mit der Auswurfstange (230) verbindet, um in Bezug auf die Auswurfstange (230) neigbar zu sein.

3. Spritzgießmaschine nach Anspruch 1 oder 2,
wobei die Kopplung (250) das Querhaupt (240) mit der Auswurfstange (230) verbindet, um in einer Richtung beweglich zu sein, die zu einer Achse der Auswurfstange (230) senkrecht ist.

4. Spritzgießmaschine nach einem der Ansprüche 1 bis 3,
wobei das Lager (123) einen Walzenkörper (124) enthält, welcher sich mit der Auswurfstange (230) in Kontakt befindet.

5. Spritzgießmaschine nach Anspruch 4,
wobei eine Außenumfangsfläche der Auswurfstange (230) eine säulenartige Oberfläche enthält, und
wobei sich der Walzenkörper (124) mit der säulenartigen Oberfläche in Kontakt befindet.

## Revendications

1. Une machine de moulage par injection comprenant :
un plateau (120) sur lequel est fixé un moule ;
une tige d'éjecteur (230) qui est disposée dans un trou débouchant (122) du plateau (120) afin d'être mobile vers l'avant ou vers l'arrière et éjecte un produit de moulage du moule ;
un palier (123) qui est prévu à l'intérieur du trou débouchant (122) du plateau (120),
un coulisseau (240) qui déplace la tige d'éjecteur (230) vers l'avant ou vers l'arrière ; et
un couplage (250) qui raccorde la tige d'éjecteur (230) et le coulisseau (240) entre eux afin d'absorber le défaut d'alignement entre la tige d'éjecteur (230) et le coulisseau (240),
dans laquelle le palier (123) est en contact avec la tige d'éjecteur (230) et guide la tige d'éjecteur (230) dans une direction axiale de la tige d'éjecteur (230).

2. La machine de moulage par injection selon la revendication 1,
dans laquelle le couplage (250) raccorde le coulisseau (240) à la tige d'éjecteur (230) pour pouvoir s'incliner par rapport à la tige d'éjecteur (230).

3. La machine de moulage par injection selon la revendication 1 ou 2, dans laquelle le couplage (250) raccorde le coulisseau (240) à la tige d'éjecteur (230) pour être mobile dans une direction orthogonale à un axe de la tige d'éjecteur (230).

4. La machine de moulage par injection selon l'une quelconque des revendications 1 à 3,
dans laquelle le palier (123) comprend un corps roulant (124) qui est en contact avec la tige d'éjecteur (230).

5. La machine de moulage par injection selon la revendication 4,
dans laquelle la surface périphérique externe de la tige d'éjecteur (230) comprend une surface colonnaire, et
dans laquelle le corps roulant (124) est en contact avec la surface colonnaire.
